# EUROPEAN PATENT APPLICATION

(11) **EP 0 696 832 A2**
(43) Date of publication of application: **14.02.1996**
(21) Application number: 95305567.0
(22) Date of filing: 09.08.1995
(51) Int. Cl.: H02J 9/06

(54) **Power supply unit for an electronic system and a method for controlling the unit**

(30) Priority: 12.08.1994 JP 190259/94
(71) Applicant: International Business Machines Corporation, Armonk, N.Y. 10504 (US)
(72) Inventor: Suzuki, Keiji, Fujisawa-shi, Kanagawa-ken (JP); Kozasu, Yohichi, Yamato-shi, Kanagawa-ken (JP)
(74) Representative: Litherland, David Peter

(57) **Abstract**

Disclosed is a power supply unit that can properly prevent a reverse current from a battery to an external power source and that is employed for an electronic system, such as a notebook computer, which is activated by both an external power source and an incorporated battery, and a method for controlling such a power supply unit.

A power supply unit for an electronic system, to which power is supplied by both an external power source and a battery, comprises: voltage detection means for detecting an output voltage of the external power source; current detection means for detecting an output current of the external power source; logical sum means for outputting a logical sum of the detection results of the voltage detection means and the current detection means; and connection/disconnection means for connecting and disconnecting the external power source in response to the output of the logical sum means. Since the external power source is disconnected when only the battery is active, a reverse current from the battery is properly prevented. The connection/disconnection means of the external power source includes only an FET switch, does not require a Schottky barrier diode, so that heat generation will not occur.

## Description

The present invention relates to a power supply unit, for an electronic system, and a method for its control, and in particular, to a power supply unit for an electronic system, such as a notebook computer, that may be powered by both an external power source and an incorporated battery. More specifically, the present invention pertains to a power supply unit, for an electronic system, that can appropriately prevent a reverse current from a battery to an external power source, and a method for its control.

Conventional electronic systems receive power constantly and steadily from external power sources (commercially available power sources, in general). However, as electronic equipment has become more compact, light, and portable as a result of recent advances in the art, electronic equipment that can be activated by batteries has come into practical use. A notebook computer (or a portable computer) is a good example.

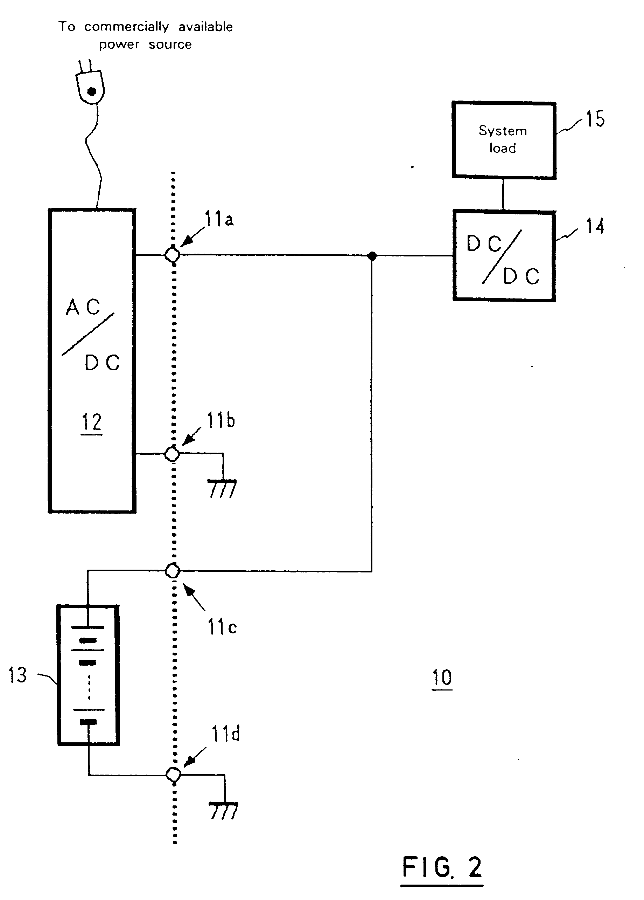

Fig. 2 is a schematic diagram showing the general power supply unit for an electronic system. In Fig. 2, power for an electronic system 10 is supplied by an external power source through an AC/DC adaptor 12, or by a battery 13.

The AC/DC adaptor 12 is a device that converts an AC voltage from an external power source into a DC voltage, so that the electronic system 10 can use it. A power supply line on the positive side of the AC/DC adaptor 12 communicates via an input terminal 11a with a DC/DC converter 14 within the electronic system 10. A power supply line on the negative side of the AC/DC adaptor 12 is connected to a GND within the electronic system 10 via an input terminal 11b, so that the output current of the AC/DC adaptor 12 is returned from the GND.

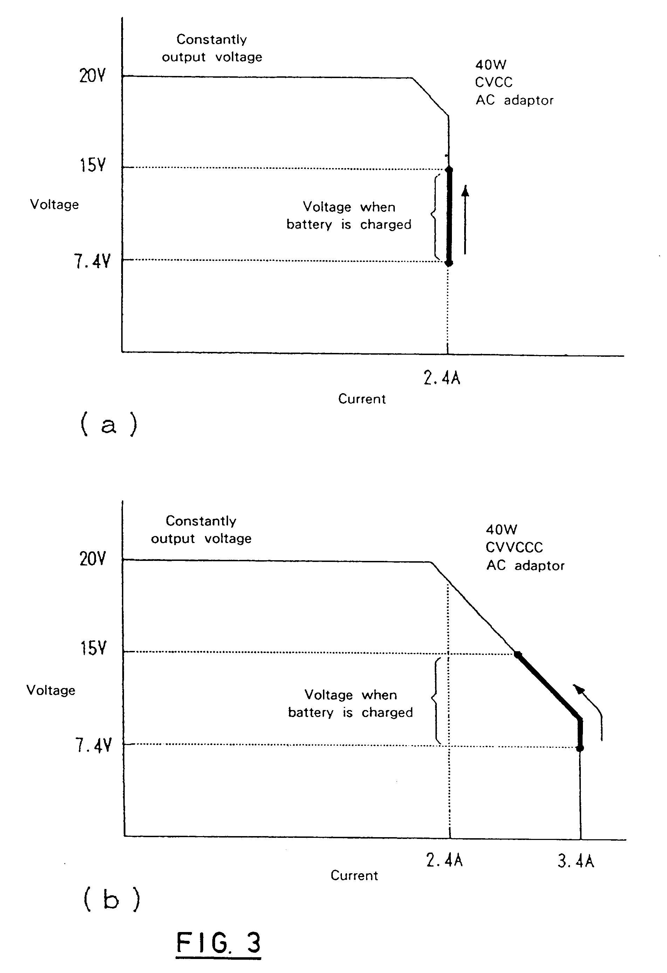

The AC/DC adaptor 12 is designed to be operated with an inherent output characteristic, such as CVCC (constant voltage-constant current) or CVVCCC (constant voltage-approximate constant power-constant current). The graph in Fig. 3A shows the current-voltage characteristic of the AC/DC adaptor 12 that is operated at 40 W in the CVCC mode. The graph in Fig. 3B shows the current-voltage characteristic of an AC/DC adaptor 12 that is operated at 40 W and in the CVVCCC mode. The characteristic, CVCC or CVVCCC, is determined by the capacity and charging/discharging characteristic of the battery 13 (which will be described later) that the electronic system 10 employs. When only an external power source supplies power (including when both the external power source and the battery 13 are connected but the battery 13 is not recharged), the AC/DC adaptor 12 shifts in the constant voltage area (CV). The output voltage of the AC/DC adaptor 12 is at almost the same level as an open-circuit voltage of 20 V (+5%, -10%) when the external power source is released from a system load 15, and current is increased or decreased according to the power consumption of the system load 15. When the AC/DC adaptor 12 charges the battery 13, the AC/DC adaptor 12 shifts the constant current (CC) or the approximate constant power (VC) area. The output voltage of the AC/DC adaptor 12 at this time is 7.4 V to 15 v (7.4 V is a discharge termination voltage for the battery 13, while 15 V is a recharging termination voltage for the battery 13).

The battery 13, which is incorporated in the electronic system 10, is, for example, a nickel cadmium (Ni-Cd) cell or a nickel metal hydride (Ni-MH) cell. The power supply line on the positive side of the battery 13 is connected to the electronic system 10 at an input terminal 11c, is electrically coupled with the power supply line on the positive side of the AC/DC adaptor 12, and communicates with the DC/DC converter 14. The power supply line on the negative side of the batter 13 is connected to the GND in the electronic system 10 via an input terminal 11d, so that an output current of the battery 13 is returned from the GND. The battery 13 generally comprises an arrangement of eight battery cells of about 1.2 V each connected in series. In this case, the output voltage of the battery 13 is 7.4 V to 15 V, and does not exceed 16 v even at its maximum.

The DC/DC converter 14 is a device that controls power voltage V_{CC}, which is supplied to the system load 15. More specifically, the DC/DC converter 14 is coupled with the both power supply lines of the AC/DC adaptor 12 and the battery 13 on their positive sides parallely. The DC/DC converter 14 reduces the constant voltage (20 V) of the external power source (AC/DC adaptor 12), or the constant voltage (7.4 V to 15 V) of the battery 13, to a voltage level (normally, 5 V or 3.3 V) that is appropriate for the operation of the system load 15, and maintains a constant voltage level exactly.

The system load 15 represents a general component in the electronic system 10 that actually consumes power, and that is driven by constant DC voltage, which is supplied by the DC/DC converter 14. If the electronic system 10 is a notebook computer, a CPU, a memory, or a display, individual peripherals are included in the system loads 15.

In an electronic system that receives, in parallel, the output voltages of the AC/DC adaptor 12 and the battery 13 described above, a counter measure is required to prevent the flow of a reverse current that is caused by a voltage difference between the two power sources. In particular, means must be provided to prevent a current backflow from the power supply line of the battery 13 to the power supply line of the AC/DC adaptor 12, while only the battery 13 is supplying power, because power consumption by a circuit in the AC/DC adaptor 12, caused by the current reversal, is substantially wasteful, and the power of the battery 13, which has a finite capacity, is expended uselessly. Power source detection means is sometimes provided on the power supply line on the positive side of the AC/DC adaptor 12 to detect the connection of an external power source. However reverse current flow from the battery 13 may cause a power source detection means to incorrectly identify the presence of the external power source.

The following two prior art examples exist as a circuit or a method for preventing a reverse current flow from the battery 13 to the AC/DC adaptor 12.

### Prior Art Example 1

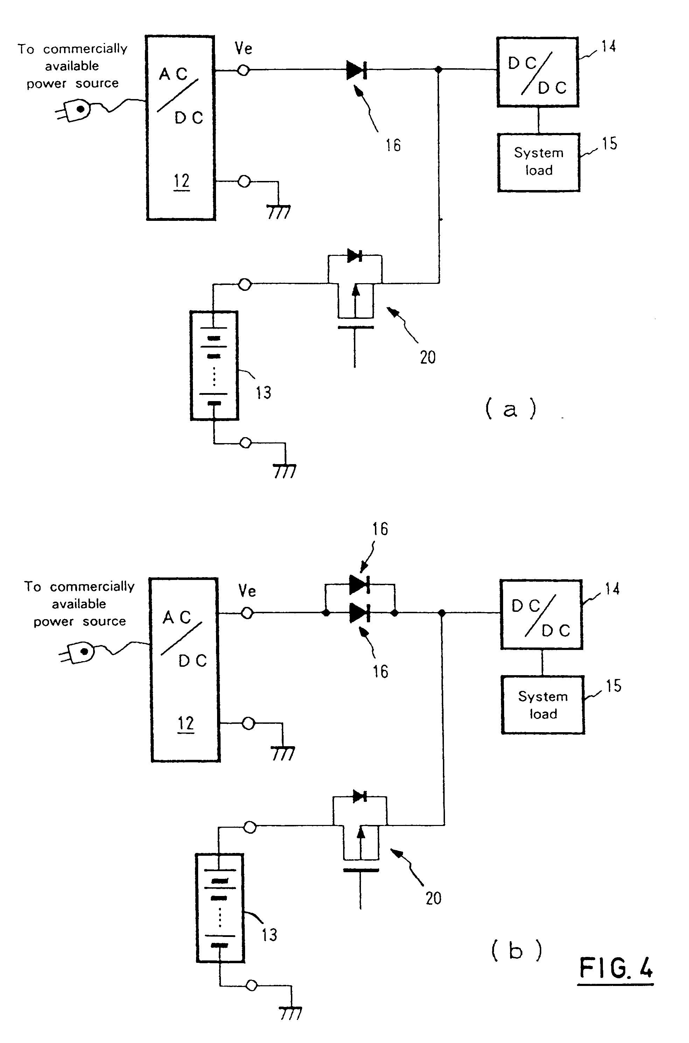

One prior art example inserts a diode into the power supply line of the AC/DC adaptor 12 to prevent a reverse current flow. In Fig. 4A, in a diagram illustrating <Prior art example 1>, a diode 16, for preventing a current backflow, is connected in series between the input terminal 11a, on the positive side of the AC/DC adaptor 12, and the input terminal 11c, on the positive side of the battery 13. The diode 16 is so connected that a normal current direction is forward. Therefore, even when the output voltage of the battery 13 is higher than that of the AC/DC adaptor 12, a backflow to the AC/DC adaptor 12 can be prevented.

Suppose that a Schottky barrier diode or a fast recovery diode is employed as the diode 16. Since a voltage reduction V_{f} in the forward direction for the Schottky barrier diode is relatively low (0.4 V to 0.5 V), this diode can effectively reduce the power that is wasted. However, at a high temperature a reverse current is increased, so that the prevention of a reverse current flow can not be effected. Therefore a Schottky barrier diode is not the proper one to use as the diode 16. On the other hand, although the voltage reduction of a fast recovery diode in a forward direction is large (0.8 V to 1.0 V), even at a high temperature a current backflow is substantially decreased, when compared with that for a Schottky barrier diode, so that a fast recovery diode can be used as the diode 16. A fast recovery diode, however, may become overheated when a voltage drop in the forward direction causes a large consumption of power. When, for example, a 40 W CVVCCC AC/DC adaptor 12 outputs a current of 3 A, the power consumed by a fast recovery diode is 2.4 W to 3.0 W (= 3 A x 0.8 V to 1.0 V), so that a heat discharge design that incorporates or provides for the use of a heat sink or a metal plate is required. Although, as is shown in Fig. 4B, the heat generation source can be dispersed by using a plurality of fast recovery diodes 16, that are connected in parallel with each other, this arrangement does not provide enough heat discharge, and a design that incorporates additional heat discharge means is required.

Since there is a standard component item that consists of a single chip on which two fast recovery diodes are connected in parallel, generally, an arrangement of two or four diodes is used that involves the employment one or two such chips. However, with respect to manufacturing costs, it is not desirable to employ a plurality of rather expensive diode chips.

### Prior Art Example 2

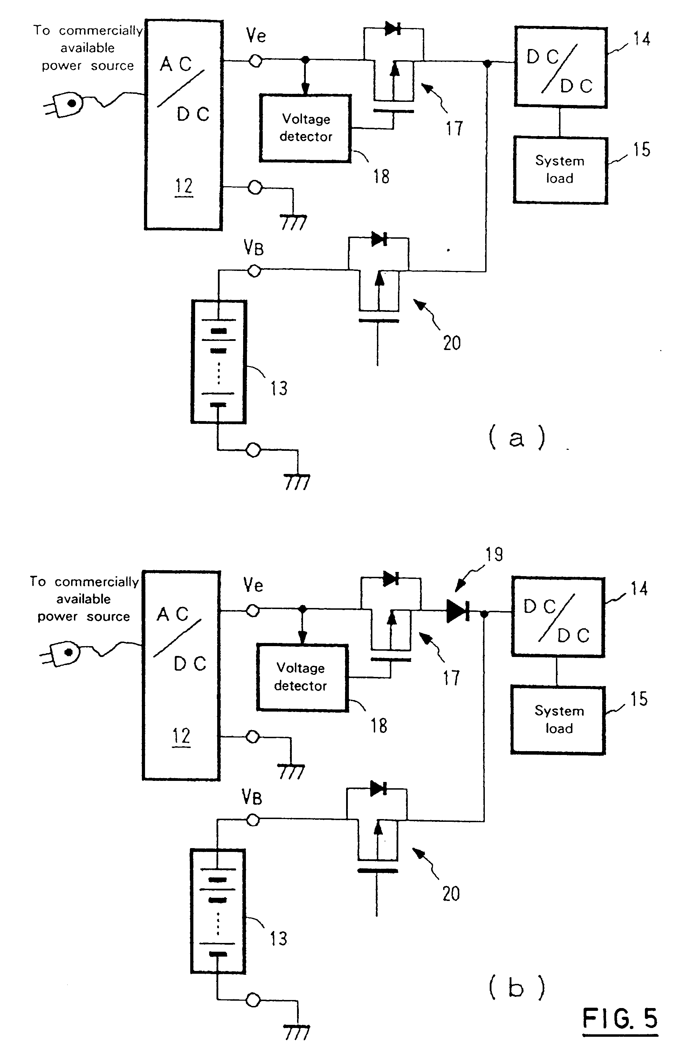

Another prior art provides a connection/disconnection means, for current backflow prevention, on the power supply line of the AC/DC adaptor 12. In Fig. 5A, in a diagram illustrating <Prior art example 2>, an FET switch (e.g., P-channel power MOS_FET) 17 as, which is employed as a connection/disconnection means, is connected in series between the input terminal 11a, on the positive side of the AC/DC adaptor 12, and the input terminal 11c, on the positive side of the battery 13. The FET switch 17 is turned on when an external power source supplies power via the AC/DC adaptor 12 to the system load 15, or when the battery 13 is to be charged. The FET switch 17 is turned off when only the battery 13 is supplying power. In this manner, current backflow to the AC/DC adaptor 12 is prevented.

In this case, a circuit must be provided that monitors the application of voltage by the external power source and renders the switch 17 on or off. In Fig. 5A, a voltage detector 18, on the positive side of the AC/DC adaptor 12, is connected in parallel to the input terminal 11a to monitor the output voltage of the external power source and to render the FET switch 17 on or off. More specifically, the voltage detector 18 compares the output voltage Vₑ of the AC/DC adaptor 12 (actually, the voltage at the positive-side input terminal 11a) with a predetermined reference voltage V_{ref}. When Vₑ is equal to or greater than V_{ref}, the voltage detector 18 determines that a voltage from the external power source has been applied, and turns on the FET switch 17. When Vₑ is lower than V_{ref}, the voltage detector 18 determines that a voltage from the external power source has not been applied, and turns off the FET switch 17.

When the system load 15 is driven by the external power source, the output voltage Vₑ of the AC/DC adaptor 12 of a CVCC system or a CVVCCC system has a considerably higher voltage level (20 V) than the output level of the battery 13. When the battery 13 is to be charged, the output voltage V_{B} is shifted to almost the same voltage level as the output voltage of the battery 13 (actually, the voltage at the positive-side input terminal 11c, 7.4 V to 15 V) as is described above (see Figs. 3A and 3B). That is, even if a voltage is applied by the external power source, the output voltage Vₑ of the AC/DC adaptor 12 is varied in a comparative wide range from the charging start voltage (7.4 V) to the constant voltage area (20 V). Therefore, to determine, only from Vₑ, whether or not the voltage is applied by the external power supply, the reference voltage V_{ref} must be set lower than 7.4 V, which is the minimum value of V_{B}.

A property of the FET switch 17 is that a current flows bidirectionally in the ON state. If the external power source is detached while both the external power supply and the battery 13 are being operated, the output voltage V_{B} at the input terminal 11c is maintained at the input side of the voltage detector 18 via the FET switch 17, and the FET switch 17 is kept in the ON state. To prevent this, as is shown in Fig. 5B, a diode 19, for preventing a reverse current flow, is inserted between the FET switch 17 and the positive-side input terminal 11c of the battery 13 to avoid the reverse current from the battery 13. The diode 19 may be either a Schottky barrier diode or a fast recovery diode. With the employment of a Schottky barrier diode, the reverse current can be cut off by the FET switch 17 in <prior art example 2> even though a reverse current flow increases at high temperature. Therefore, a Schottky barrier diode that has a small voltage reduction in the forward direction is adequate for employment as the diode 19. However, a Schottky barrier diode still has a voltage drop of 0.4 V to 0.5 V in the forward direction, and with an operation current of 3 A, there is a power consumption of 1.2 W to 1.5 W (= 3 A x 0.4 V to 0.5 V). The design of a heat discharge means, however, continues to constitute a problem.

In short, in prior art examples 1 and 2, to prevent a reverse current flow from the battery 13 to the AC/DC adaptor 12, a fast recovery diode or a Schottky barrier diode must be employed. Since each of these diodes for preventing a reverse current flow is a primary heat generation source in an electric circuit, it would be understood by one having ordinary skill in the art that a heat discharge countermeasure is required.

In Figs. 4 and 5, a P-channel power MOS_FET 20 is inserted at some point in the positive-side power supply line of the battery 13 before the supply line is coupled with the power supply line of the AC/DC adaptor 12. The FET switch 20 is employed to control the charging/discharging of the battery 13. More specifically, when the battery 13 is to be recharged by the external power source, or when the battery 13 supplies power to the system load 15, the FET switch 20 is turned on, and for the other cases, the FET switch 20 is turned off. The ON/OFF control of the FET switch 20 is performed in the some manner that a dedicated processor, for example, monitors the remaining capacity of the battery 13, its temperature, and the connection or the disconnection of the external power source. The charging and the discharging of the battery 13 is not included within the scope of the subject matter of the present invention, and a detailed explanation for the switching operation of the FET 20 will not be given.

Accordingly, the present invention provides a power supply unit for an electronic system, to which power is supplied by both an external power source and a battery, comprises: voltage detection means, for detecting an output voltage of the external power source; current detection means, for detecting an output current of the external power source; logical sum means, for outputting a logical sum of the detection results of the voltage detection means and the current detection means; and connection/disconnection means, for connecting or disconnecting the external power source in response to the output of the logical sum means.

An embodiment advantageously provides a power supply unit for an electronic system, such as a notebook computer, that is activated by both an external power source and an incorporated battery, and to provide a method for controlling the unit; and more particularly, to provide a power supply unit, for an electronic system, that can appropriately prevent a reverse current flow from a battery to an external power source, and to provide a control method for the unit.

Further reverse current flow is prevented from a battery to an external power source without requiring the employment of a diode, to prevent a backflow, such as a Schottky barrier diode or a fast recovery diode, and to provide a method for the control of such a power supply unit.

An embodiment of the present invention provides a power supply unit wherein said power source comprises: an AC/DC adaptor, connectable to an external power source, for converting an AC voltage from said external power source into a DC voltage; a battery; a DC/DC converter, for adjusting an output voltage of said AC/DC adaptor or of said battery; voltage detection means, for detecting the output voltage of said AC/DC adaptor and for outputting a voltage detection signal; current detection means, for detecting the output current of said AC/DC adaptor and for outputting a current detection signal; logical sum means, for outputting a logical sum of said voltage detection signal and said current detection signal; and connection/disconnection means, for connecting or disconnecting said AC/DC adaptor in response to the output of said logical sum means.

According to a further aspect of the present invention, a method for controlling a power supply unit for an electronic system, to which power is supplied by both an external power source and a battery, comprises: a voltage detection step, of detecting an output voltage of the external power source; a current detection step, of detecting an output current of the external power source; a calculation step, of calculating a logical sum by adding the detection result for the output voltage and the detection result for the output current; and a connection/disconnection step, of connecting or disconnecting the external power source in response to the logical sum.

As described above, the output voltage of the external power source is detected by comparing it with a predetermined reference voltage. Only when the output voltage is higher than the reference voltage, the detection result is output. The reference voltage is set to a higher level than the maximum value of the terminal voltage of the battery, and to a lower level than the output voltage of the external power source when it outputs a constant voltage. Therefore, the external power source is connected when the voltage is applied by the external power source, such as when the output voltage of the external power source is considerably higher than the reference voltage (specifically, when the system load 15 is driven in the CV area of 20 V), or when the output current of the external power source is flowing, even when its output voltage is lower than the reference voltage (specifically, 7.4 V to 15 V when the battery is being recharged). When only the voltage from the battery is applied, the output voltage of the external power source is below the reference voltage and the output current of the external power source does not flow, so that the external power source is disconnected. In this manner, a reverse current flow from the battery to the external power source can be properly prevented.

In addition, according to an embodiment, the connection/disconnection of the external power source can be accomplished by only a single FET switch (e.g., a P-channel power MOS_FET), and a diode for preventing a reverse current, such as a Schottky barrier diode or a fast recovery diode, is not required. Therefore, the heating problem due to the diode is resolved, and as the design of a heat discharge means is thereby simplified, manufacturing costs can be reduced.

Embodiments of the present invention will now be described, by way of example only, with reference to the accompanying drawings in which:

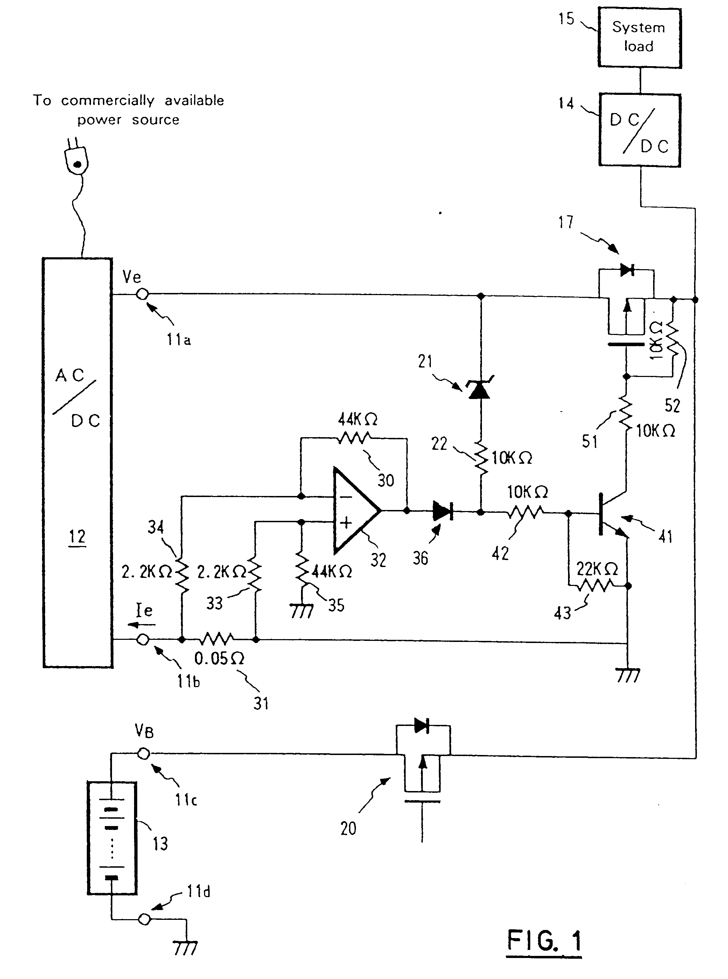

Fig. 1 is a schematic diagram illustrating a power supply unit in an electronic system according to one embodiment of the present invention.

Fig. 2 is a schematic diagram illustrating the general power supply unit of an electronic system.

Figs. 3A and 3B are graphs showing the operational characteristic of an AC/DC adaptor, with the graph in Fig. 3A showing the current-voltage characteristic of an AC/DC adaptor that is operated at 40 W in the CVCC mode, and the graph in Fig. 3B showing the current-voltage characteristic of an AC/DC adaptor that is operated at 40 W in the CVVCCC mode.

Figs. 4A and 4B are diagrams showing a power supply circuit in prior art example 1, with in Fig. 4A, a diode 16 for preventing a reverse current being inserted between a positive-side input terminal 11a of an AC/DC adaptor 12 and a positive-side input terminal 11c of a battery 13, and with, in Fig. 4B, two of the diodes 16 being connected in parallel.

Figs. 5A and 5B are diagrams showing a power supply circuit in prior art example 2, with, in Fig. 5A, a P-channel power CMOS_FET 17 that is employed as a connection/disconnection means being inserted between a positive-side input terminal 11a of an AC/DC adaptor 12 and a positive-side input terminal 11c of a battery 13, and with, in Fig. 5B, a diode 19 for preventing a reverse current flow being further inserted between the FET switch 17 and the input terminal 11c.

### A. Arrangement of a power supply unit

Fig. 1 is a schematic diagram showing a power supply unit of an electronic system according to one embodiment of the present invention. The reference numbers that are used to denote components in Fig. 2 are employed to denote corresponding or identical components in Fig. 1.

The power supply unit in this embodiment comprises an AC/DC adaptor 12; a battery 13; a DC/DC adaptor 14; voltage detection means for detecting an output voltage Vₑ of an external power source; current detection means for detecting an output current Iₑ of the external power source; logical sum means for outputting a logical sum of the detection results of the voltage detection means and the current detection means; and connection/disconnection means for connecting and disconnecting the input of the external power source in response to the output of the logical sum means. First, the structure of the individual components will be described.

### (1) Voltage detection means

The voltage detection means is provided by the parallel connection of a Zener diode 21 on the power supply line on the positive side of the AC/Dc adaptor 12.

A general characteristic of a Zener diode is that a reverse current is drastically increased when a voltage that is equal to or greater than Zener voltage V_{z} is applied in the reverse direction. A Zener diode, that has an optional Zener voltage V_{z}, can be selected for this embodiment. In this embodiment, the Zener diode 21 that has a Zener voltage V_{z} of 15 V is selected. When the output voltage Vₑ of the AC/DC adaptor 12 (the voltage at the input terminal 11a) is 17 V or greater, the output of the voltage detection means is driven (which will be described later). This is equivalent to the reference voltage V_{ref} that is set to 17 V, which is between the open-circuit voltage of the external power source (20 v +5%, -10%, with a minimum value of about 18 V) and the output voltage V_{B} of the battery 13 (the voltage at the input terminal 11c; 7.4 V to 15 V with a maximum value of 16 V). Thus, when the external power source is disconnected and only the battery 13 is supplying power, or when the AC/DC adaptor 12 is charging the battery 13 in the CC mode or in the VC mode, all output by the voltage detection means is inhibited. When the AC/DC adaptor 12 is in the CV mode, the output of the voltage detection means is driven.

The output of the voltage detection means is transmitted to the logical sum means through a 10 kΩ resistor 22 that protects the diode 21 from an overcurrent.

### (2) Current detection means

The current detection means in this embodiment includes a 0,05 Ω current detection resistor 31 and an OP amplifier 32.

The current detection resistor 31 is connected in series along the power supply line on the negative side of the AC/DC adaptor 12, so that it converts the output current Iₑ, which flows along the power supply line, into a voltage value that is proportional to the current value.

One end of the current detection resistor 31 (GND side) is connected via a 2.2 kΩ resistor 33 to the non-inversion terminal of the OP amplifier 32. The other end of the current detection resistor 31 (negative side) is connected via a 2.2 kΩ resistor 34 to the inversion terminal of the OP amplifier 32. With this arrangement, the OP amplifier 32 amplifies the voltages at both ends of the current detection resistor 31. Further, the non-inversion terminal is connected to the GND via a 44 kΩ resistor 35, while the output of the OP amplifier 32 is fed back to the inversion terminal via a 44 kΩ resistor 30. The gain for the OP amplifier 32, therefore, is increased 20 times by voltage division, which is performed by the resistors 33 and 35, and the resistors 30 and 34. The voltage gain with respect to the output current Iₑ is set to 1.0 V/A. For example, when an output current of 1.7 A is flowing across the current detection resistor 31, the output of the OP amplifier 32 is 1.7 V.

The output of the current detection means is sent to the logical sum means via a diode 36. An explanation will be given later.

Since the current detection means has been conventionally provided to control the charge operation of the battery 13 by using the output current of the external power source (control the ON/OFF state of the FET 20), this may be employed as it is. In addition, the diode 36 is employed to avoid an erroneous detection of the output current Iₑ when a current from the Zener diode 21 flows back to the OP amplifier 32 while the AC/DC adaptor 12 is in the CV mode. In this embodiment, a small-signal silicon diode is employed as the diode 36.

### (3) Logical sum means

The logical sum means in this embodiment is an npn transistor 41.

The outputs of the voltage detection means and the current detection means are connected in parallel, and are voltage-divided by a 10 kΩ resistor 42 and a 22 kΩ resistor 43, and the resultant output is sent to the base of the transistor 41. The emitter of the transistor 41 is grounded to the GND, and the collector is connected to the connection/disconnection means. The output of the voltage detection means is further adjusted by voltage division by the resistors 22, 42, and 43. When the output voltage Vₑ of the AC/DC adaptor 12 (the voltage at the input terminal 11a) exceeds the reference voltage, 17 v, the transistor 41 is rendered active. The output of the current detection means is affected by the voltage drop in the forward direction by the diode 36, and is adjusted by voltage division by the resistors 42 and 43. When the output current Iₑ of the AC/DC adaptor 12 exceeds the reference current I_{ref}, 1.7 A, the transistor 41 is rendered active.

When either the output voltage Vₑ, or the output current Iₑ, of the AC/DC adaptor 12 exceeds a predetermined reference voltage V_{ref}, or the reference current I_{ref}, the base potential of the transistor 41 exceeds a threshold value, and the transistor 41 is rendered on. When neither the output voltage Vₑ nor the output current Iₑ of the AC/DC adaptor 12 attains the reference voltage v_{ref} or the reference current I_{ref}, the transistor 41 is rendered off (i.e., it is determined that no power is being supplied from the external power source). In other words, the logical sum means employs a logical sum of the detection results of the voltage detection means and the current detection means to determine whether or not the external power source is supplying power.

### (4) Connection/disconnection means

The connection/disconnection means in this embodiment is a P-channel power MOS_FET 17.

The collector of the transistor 41 is connected to the gate of the FET switch 17 via a 10 kΩ resistor 51. The positive-side input terminal of the AC/DC adaptor 12 is connected to the drain of the FET switch 17, while the positive-side input terminal of the battery 13 is connected to its source. A 22 kΩ resistor 52 is inserted between the gate and the source of the FET 17 to set a bias voltage, between the gate and the source, by employing a voltage divided ratio of the resistor 52 to a 10 kΩ resistor 51.

When the transistor 41 is rendered on (i.e., the logical sum means acknowledges that a voltage has been applied by the external power source), a current flows from the positive-side input terminal 11a of the AC/DC adaptor 12, toward a parasitic diode of the FET 17, the resistors 52 and 51, and the transistor 41. A bias voltage is then applied between the gate and source, and the FET switch 17 is turned on. Accordingly, the AC/DC adaptor 12 that was connected only through the parasitic diode of the FET switch 17 is now fully connected, with the FET switch 17 being definitely on. The ON resistance between the drain and the source of the FET 17 is at most 50 mΩ. Even when the output current Iₑ of the AC/DC adaptor 12 is the maximum 3.4 A, the power consumed by the FET 17 is only approximately 0.05 Ω x (3.4 A) ≒ 0.6 W. It would be therefore understood that power that is consumed can be reduced more than when a fast recovery diode or a Schottky barrier diode is employed to prevent a reverse current.

When the transistor 41 is rendered off (i.e., the logical sum means does not acknowledge that a voltage has been applied by the external power source), the gate of the FET 17 is cut off from the GND and there is no current path to the resistor 52. The bias voltage is not applied between the gate and the source, and the FET switch 17 is turned off. Accordingly, a current flow from the battery 13 to the AC/DC adaptor 12 is interrupted, so that a current backflow from the battery 13 to the AC/DC adaptor 12 will not occur.

### B. Operation of the power supply unit

The components of the power supply unit according to this embodiment have been described in the preceding article. In this article, the operation of the power supply unit will be explained while referring to Table 1. Table 1 shows the output voltage Vₑ (equivalent to the voltage at the input terminal 11a) and the output current Iₑ of the external power source during the individual operations. It should be noted that the AC/DC adaptor 12 is a CVVCCC system and has a 20 V DC (direct current) 40 W output, and that in the battery 13 eight cells are connected in series.

| | Application of external power force | | Application of battery |
|---|---|---|---|
| | Battery not charged | Battery charged | |
| Output voltage of external power source Vₑ | 20VDC | 7.4-15VDC | 0VDC |
| Output current of external power source Iₑ | 0-2.0A | 2.4-3.4A | 0A |

| TABLE 1 | | | |
|---|---|---|---|
| | | | |

For the operation of the power supply there are two major functional divisions: when the external power source is active, and when the battery 13 is active. When the external power source is active, the operation is further divided to provide for the case where the battery 13 is not to be charged, and the case where the battery 13 is to be charged.

### (1) When the external power source is active and the battery 13 is not to be charged

When the external power source is active and the battery 13 is not to be charged, the AC/DC adaptor 12 is operated in the CV mode (as is described above), and the output voltage Vₑ of the external power source (voltage at the input terminal 11a) is 20 V DC, which is higher than the reference voltage V_{ref} (= 17 V). The output of the voltage detection means, when it is expressed as a logical value, is therefore always "1". The output current Iₑ shifts between 0 A and 2.0 A according to the operational state of the system load 15. More specifically, since the output current Iₑ changes before and after the reference current I_{ref} (= 1.7 A), the output of the current detection means, when it is expressed as a logical value, can be "0" or "1". In this case, the logical sum means outputs "1", which is the logical sum of the outputs of both detection means, and in response to this output, the connection/disconnection means maintains the connection of the external power source.

### (2) When the battery 13 is being charged by the external power source

When the battery 13 is being charged by the external power source, the AC/DC adaptor 12 is operated in the VC mode or the CC mode (as is described above), the output voltage Vₑ of the external power source is shifted between 7.4 V to 15 V DC, which is the charging voltage for the battery 13. More specifically, since the output voltage Vₑ is below the reference voltage V_{ref}, the output of the voltage detection means, when it is expressed as a logical value, is "0". The output current Iₑ during the charging is 2.4 A to 3.4 A (see Fig. 3B), which is greater than the reference current I_{ref}. Therefore, the output of the current detection means, when it is expressed as a logical value, is "1". In this case, the logical sum means outputs "1", which is the logical sum of the outputs of both detection means, and in response to this output, the connection/disconnection means maintains the connection of the external power source.

### (3) When only the battery 13 is active

When only the battery 13 is active, the external power source is normally separated from the electronic system 10. The voltage Vₑ at the terminal 11a is 0 V DC, and the current Iₑ that is returned to the terminal 11b is 0 A. The outputs of the voltage detection means and the current detection means are both "0", and, accordingly, the output sum of the logical sum means is "0". In response to this output, the connection/disconnection means disconnects the input terminal 11a of the AC/DC adaptor 12 from the input terminal 11c of the battery 13 (more specifically, these terminals are connected only by the parasitic diode of the FET switch 17). The output current of the battery 13 does not flow back to the AC/DC adaptor 12.

### (4) When the external power source is extracted while the battery 13 is being charged

Although the external power source is active while the battery 13 is being charged, as is described in (2), the output of the voltage detection means has already dropped to "0". When the external power source is removed in this state, the flow of the output current Iₑ is halted, the output of the current detection means is "0", and, accordingly, the output of the logical sum means is "0" and the input terminal of the AC/DC adaptor 12 is completely disconnected. Since the reference voltage V_{ref} of the voltage detection means is set higher than the maximum output voltage of the battery 13, even if the output current of the battery 13 flows inversely across the FET switch 17, the output of the voltage detection means can not be "1". Therefore, a diode (the diode 19 in Fig. 5B) for preventing a reverse current flow is not required.

As described above it is possible to provide a power supply unit that can properly prevent a reverse current flow from a battery to an external power source and that can be employed for an electronic system, such as a notebook computer, which is activated by both an external power source and an incorporated battery, and to provide a method for controlling such a power supply unit. Further, since a diode for preventing a reverse current flow, such as a Schottky barrier diode or a fast recovery diode, is not required, a heat discharge means can be easily designed and manufacturing costs can be reduced.

## Claims

1. A power supply unit for an electronic system, to which power is supplied by both a power source and a battery, comprising:
voltage detection means, for detecting an output voltage of said power source;
current detection means, for detecting an output current of said power source;
logical sum means, for outputting a logical sum of the detection results of said voltage detection means and said current detection means; and
connection/disconnection means, for connecting or disconnecting said power source in response to the output of said logical sum means.

2. A power supply unit according to claim 1, wherein said voltage detection means compares said output voltage of said power source with a predetermined reference voltage, and outputs the detection results only when said output voltage is higher than said reference voltage.

3. A power supply unit according to claim 2, wherein said reference voltage is set to a higher level than a maximum output voltage value of said battery and to a lower level than said output voltage of said power source when said power source outputs a constant voltage.

4. A power supply unit according to claim 1, 2, or 3, wherein said connection/disconnection means is a power MOS_FET.

5. A power supply unit according to any preceding claim, wherein said power source comprises an external power source.

6. A power supply unit as claimed in any of claims 1 to 4, wherein said power source comprises:
an AC/DC adaptor, connectable to an external power source, for converting an AC voltage from said external power source into a DC voltage;
a battery;
a DC/DC converter, for adjusting an output voltage of said AC/DC adaptor or of said battery;
voltage detection means, for detecting the output voltage of said AC/DC adaptor and for outputting a voltage detection signal;
current detection means, for detecting the output current of said AC/DC adaptor and for outputting a current detection signal;
logical sum means, for outputting a logical sum of said voltage detection signal and said current detection signal; and
connection/disconnection means, for connecting or disconnecting said AC/DC adaptor in response to the output of said logical sum means.

7. A method for controlling a power supply unit for an electronic system, to which power is supplied by both a power source and a battery, comprising:
a voltage detection step, of detecting an output voltage of said power source;
a current detection step, of detecting an output current of said power source;
a calculation step, of calculating a logical sum by adding the detection result for said output voltage and the detection result for said output current; and
a connection/disconnection step, of connecting or disconnecting said power source in response to said logical sum.

8. A method for controlling a power supply unit according to claim 7, wherein, at said voltage detection step, said output voltage of said power source is compared with a predetermined reference voltage and the detection results are outputted only when said output voltage is higher than said reference voltage.

9. A method for controlling a power supply unit according to claim 8, wherein said reference voltage is set to a higher level than a maximum output voltage of said battery and to a lower level than said output voltage of said power source when said external power source outputs a constant voltage.
